# EUROPÄISCHE PATENTSCHRIFT

(11) **EP 2 653 366 B1**
(45) Veröffentlichungstag und Bekanntmachung des Hinweises auf die Patenterteilung: **15.10.2014**
(21) Anmeldenummer: 12164484.3
(22) Anmeldetag: 17.04.2012
(51) Int. Cl.: B62B 3/14, B62B 3/18, B62B 5/00

(54) **Stapelbarer Einkaufswagen**
Nestable shopping trolley
Chariot de supermarché empilable

(43) Veröffentlichungstag der Anmeldung: 23.10.2013
(73) Patentinhaber: ALDI Einkauf GmbH & Co. oHG, 45307 Essen (DE)
(72) Erfinder: Schlomann, Bernd, 27211 Bassum/Nordwohlde (DE)
(74) Vertreter: Nunnenkamp, Jörg

(56) Entgegenhaltungen:
- EP-A2- 0 364 873
- DE-B3-102004 051 040
- DE-U1-202004 002 946
- US-A- 4 046 394

## Beschreibung

Die Erfindung betrifft einen stapelbaren Einkaufswagen, mit einem Fahrgestell, ferner mit einem darauf angeordneten Korb, und mit einer Kindersitzeinrichtung mit einer Rückenlehne und einer Sitzfläche, die jeweils gelenkig an eine schwenkbare Rückwand des Korbes angeschlossen sind, wobei die Rückenlehne der Kindersitzeinrichtung in ihrem deaktivierten Zustand an der Rückwand anliegt und in ihrem aktivierten Zustand ins Innere des Korbes unter gleichzeitigem Abklappen der Sitzfläche abgewinkelt hineinragt, wobei ferner die Kindersitzeinrichtung und/oder die Rückwand mit wenigstens einem Geräuschdämpfungsmittel ausgerüstet ist, und wobei das Geräuschdämpfungsmittel die Kindersitzeinrichtung gegenüber der Rückwand und/oder dem Korb akustisch entkoppelt und/oder das Abklappen der Sitzfläche akustisch dämpft.

Stapelbare Einkaufswagen werden typischerweise genutzt, um in Selbstbedienungsgeschäften seitens eines Kunden ausgewählte Waren aufzunehmen, zur Kasse zu befördern und gegebenenfalls anschließend in ein dort abgestelltes Fahrzeug zu überführen. So geht beispielsweise der Stand der Technik nach der EP 1 630 062 A2 oder gemäß der FR 2 940 229 A1 vor. Da die fraglichen Einkaufswagen überwiegend aus Metall gefertigt sind und über die zuvor angesprochene Kindersitzeinrichtung verfügen, ergibt sich bei dem beschriebenen Einkaufsvorgang das Problem, dass beim Fahren und/oder beim Stapeln solcher Einkaufswagen durch Ineinanderschieben erhebliche Geräusche erzeugt werden. Diese Geräusche werden als besonders unangenehme empfunden, weil es sich um metallische Klappergeräusche oder sogar Schlaggeräusche handelt.

Der weitere Stand der Technik nach der DE 100 28 627 A1 befasst sich mit einem stapelbaren Einkaufswagen, der über eine ergänzende schwenkbare Abstelleinrichtung verfügt. Der Abstelleinrichtung ist wenigstens ein Haltemittel zugeordnet, welches eine Schwenkbewegung verhindert. Bei dem Haltemittel handelt es sich um Kunststoff, welches einen Quersteg formschlüssig umschließt. Hierdurch lassen sich in diesem Bereich Klappergeräusche vermeiden.

Einen anderen Ansatz verfolgt in diesem Zusammenhang die gattungsbildende Lehre nach der US 4,046,394 A. Denn dort ist der Einkaufswagen überwiegend vollständig aus Kunststoffmaterial gefertigt. Dadurch soll die Dauerhaftigkeit verbessert und die Reinigung erleichtert werden. Außerdem werden Vorteile hinsichtlich der Geräuschentwicklung geltend gemacht.

Der schließlich noch zu berücksichtigende Stand der Technik entsprechend der EP 0 364 873 A2 betrifft einen ineinanderschiebbaren bzw. stapelbaren Einkaufswagen mit einem Fahrgestell, das einen Korb trägt. Am rückwärtigen Ende des Korbes ist eine in das Korbinnere verschwenkbare Klappe vorgesehen. Die Klappe verfügt über ein Einhängeteil und ein an das Einhängeteil angelenktes Rückenteil, welche gemeinsam eine Sitzplatte für Kleinkinder tragen. Zusätzlich sind das Einhängeteil und das Rückenteil durch wenigstens aus stoßdämpfendem Kunststoff gefertigte Verbindungsteile miteinander verbunden. Dadurch soll auf einfache Weise und beim Bewegen des Einkaufswagens auch auf relativ unebenem Boden eine hörbare Geräuschentwicklung vermieden werden.

Der Erfindung liegt das technische Problem zugrunde, einen derartigen stapelbaren Einkaufswagen so weiter zu entwickeln, dass Geräuschemissionen auf ein Minimum beschränkt werden.

Zur Lösung dieser technischen Problemstellung ist ein gattungsgemäßer stapelbarer Einkaufswagen im Rahmen der Erfindung dadurch gekennzeichnet, dass das Geräuschdämpfungsmittel an der Rückwand als einen oder mehrere Streben im Innern aufnehmender Schlauchdämpfer ausgebildet ist.

Im Rahmen der Erfindung wird also primär eine Geräuschdämpfung der Kindersitzeinrichtung sowie gegebenenfalls zusätzlich noch der Rückwand verfolgt. Dadurch werden die hauptsächlichen Geräuschquellen beim Bewegen eines solchen Einkaufswagens und auch bei einem Stapelvorgang durch Ineinanderschieben größtenteils ausgeschlossen bzw. hinsichtlich ihrer Wirkung vermindert. Zu diesem Zweck sind meistens mehrere Geräuschdämpfungsmittel vorgesehen. Dabei hat es sich bewährt, wenn ein Geräuschdämpfungsmittel einerseits an der Sitzfläche und ein weiteres Geräuschdämpfungsmittel andererseits an der Rückwand vorgesehen ist. Zusätzlich mag auch die Rückenlehne mit einem Geräuschdämpfungsmittel ausgerüstet sein.

Das Geräuschdämpfungsmittel an der Sitzfläche ist typischerweise als Klappdämpfer ausgebildet. Zu diesem Zweck findet sich das Geräuschdämpfungsmittel an einer Längskante der Sitzfläche, welche im Allgemeinen einer Drehachse der Sitzfläche gegenüber der Rückwand gegenüberliegt. Dadurch kann der Klappdämpfer an der Sitzfläche in abgeklapptem Zustand der Sitzfläche und bei aktivierter Kindersitzeinrichtung an einer Querstrebe der Rückwand anliegen und diese zugleich untergreifen. Tatsächlich nimmt die Sitzfläche in ihrem abgeklappten Zustand und bei aktivierter Kindersitzeinrichtung regelmäßig eine mehr oder minder horizontale Position ein, so dass hierauf unschwer ein Kind abgesetzt werden kann. Dagegen korrespondiert der deaktivierte Zustand der Kindersitzeinrichtung dazu, dass die Sitzfläche an die Rückwand angeklappt wird. Der Übergang der Sitzfläche von ihrem abgeklappten Zustand in den angeklappten Zustand wird dadurch bewerkstelligt, dass die in aktiviertem Zustand der Kindersitzeinrichtung ins Innere des Korbes abgewinkelte Rückenlehne in Richtung auf die Rückwand bewegt wird. Dieser Vorgang sorgt gleichzeitig dafür, dass die zuvor abgeklappte Sitzfläche an die Rückwand angeklappt wird. Auch die Rückenlehne legt sich am Ende dieses Vorganges an die Rückwand an.

Um bei dem beschriebenen Klappvorgang etwaige Geräusche auf ein Minimum zu beschränken bzw. gänzlich zu unterdrücken, ist neben dem Klappdämpfer als Geräuschdämpfungsmittel an der Sitzfläche ein weiteres Geräuschdämpfungsmittel in Gestalt eines Schlagdämpfers vorgesehen. Dieser Schlagdämpfer ist regelmäßig als Führungskontur an der Sitzfläche ausgelegt.

Meistens verfügt die Sitzfläche über zwei unterseitige Führungskonturen, die jeweils an einer Abkantung der Sitzfläche ausgebildet sein können. Beim Abklappen oder Anklappen der Sitzfläche gleitet die fragliche Führungskontur auf einer Querstrebe der Rückwand entlang. Die Führungskontur ist meistens dreiteilig aufgebaut und verfügt im Wesentlichen über einen geraden Anfangsabschnitt, einen demgegenüber abgeschrägten Endabschnitt und eine abschließende Anschlagkante.

Der abgeschrägte Endabschnitt sorgt im Wesentlichen dafür, dass bei dem Klappvorgang die Sitzfläche keine streng lineare Bewegung vollführt, sondern diese Bewegung zusätzlich durch eine gewisse Hubbewegung überlagert wird. Dadurch kommt es beim Klappvorgang und insbesondere beim Anklappen der Kindersitzeinrichtung an die Rückwand nicht zu den im Stand der Technik typischen Klappgeräuschen.

Die Sitzfläche ist im Allgemeinen zusammen mit dem einen oder den mehreren Dämpfungsmitteln einstückig ausgebildet. Tatsächlich handelt es sich bei der Sitzfläche regelmäßig um ein Kunststoffspritzgussteil, welches mit der Abkantung, der Führungskontur bzw. dem Schlagdämpfer und schließlich dem Klappdämpfer zusammen ausgeformt wird, also insgesamt einstückig ausgebildet ist.

Bei dem Geräuschdämpfungsmittel an der Rückwand handelt es sich um einen eine oder mehrere Streben im Innern aufnehmenden Schlauchdämpfer. Tatsächlich sind meistens sowohl Vertikal-Schlauchdämpfer als auch Horizontal-Schlauchdämpfer vorgesehen. Im Falle der Vertikal-Schlauchdämpfer sind zwei voneinander beabstandete Vertikal-Schlauchdämpfer an der Rückwand vorgesehen, die jeweils im Innern eine Vertikalstrebe des Korbes aufnehmen. Die beiden Vertikal-Schlauchdämpfer verfügen typischerweise über einen Abstand, welcher der Länge der Längskanten der Sitzfläche der Kindersitzeinrichtung entspricht bzw. diese Länge unterschreitet. Dadurch ist sichergestellt, dass die an die Rückwand angeklappte Sitzfläche regelmäßig an den beiden beabstandeten Vertikal-Schlauchdämpfern anliegt. Meistens liegt die Anschlagkante der Führungskontur an den beiden Vertikal-Schlauchdämpfern an.

Dagegen umschließt der Horizontal-Schlauchdämpfer eine Horizontalstrebe. Diese ist meistens randseitig der Rückwand an ihrer kopfseitigen Kante realisiert, so dass der Horizontal-Schlauchdämpfer die fragliche randseitige Horizontalstrebe umschließt. Bei dieser Horizontalstrebe handelt es sich meistens um die an der Oberkante der Rückwand vorgesehene Horizontalstrebe, die regelmäßig zugleich als Schwenkachse für die ins Innere des Korbes schwenkbare Rückwand fungiert.

Die Vertikal-Schlauchdämpfer sind dagegen üblicherweise beabstandet zueinander angeordnet und an eine Breite der Sitzfläche angepasst. In hoch- oder niedergeklapptem bzw. angeklapptem Zustand der Sitzfläche schlägt dieser meistens mit ihrer Anschlagkante an die fraglichen Vertikal-Schlauchdämpfer an.

Schließlich ist die Rückwand zusätzlich noch mit einem Geräuschdämpfer ausgerüstet. Dieser Geräuschdämpfer wirkt im Allgemeinen zweifach und mag zu diesem Zweck auch aus zwei verschiedenen Kunststoffen hergestellt sein. Meistens ist der Geräuschdämpfer an den Korb angeschlossen, und zwar im Bereich einer unteren Kante einer von der Rückwand verschlossenen Öffnung. Auf diese Weise wird die Rückwand mit Hilfe des Geräuschdämpfers in entstapelter und gebrauchsfertiger Position gegenüber dem Korb einerseits akustisch entkoppelt. Andererseits und zugleich fungiert der Geräuschdämpfer als Dämpfungsanschlag für einen nachfolgenden Einkaufswagen beim Stapelvorgang. Zu diesem Zweck ist der fragliche Geräuschdämpfer an die bereits angesprochene Unterkante der Korböffnung im Bereich der Rückwand angeschlossen, so dass ein in den vorlaufenden Einkaufswagen eingeschobener nachfolgender Einkaufswagen gegen den einen bzw. die mehreren in diesen Bereich vorgesehenen Geräuschdämpfer fährt.

Neben dem an die untere Kante der von der Rückwand verschlossenen Öffnung angeschlossenen Geräuschdämpfer können noch weitere Geräuschdämpfer Korb angebracht werden. So verfügt der Korb beispielsweise randseitig um eine oder mehrere Schutzumrandungen. Diese können an jeweiligen Ecken des Korbes realisiert werden. Diese Schutzumrandungen bzw. ergänzenden Geräuschdämpfer unterstützen die erfindungsgemäße Wirkung des Einkaufswagens dahingehend, etwaige Geräuschemissionen auf ein Minimum zu beschränken. Das gilt nicht nur beim Betrieb in einem Ladenlokal, sondern auch und insbesondere beim Ineinanderschieben der Einkaufswagen. Außerdem dann, wenn die Kindersitzeinrichtung deaktiviert ist. Jedenfalls wird hierdurch ein besonders geräuscharmer Betrieb realisiert.

Im Ergebnis wird ein stapelbarer Einkaufswagen zur Verfügung gestellt, der durch besondere akustische Geräuschdämpfungsmaßnahmen ausgezeichnet ist. Außerdem lässt sich der fragliche Einkaufswagen bei geöffnetem Kindersitz bzw. aktivierter Kindersitzeinrichtung stapeln, so dass die Kindersitzeinrichtung unmittelbar bei Entnahme des Einkaufswagens genutzt werden kann. Durch die geräuschdämpfende Auslegung ist der stapelbare Einkaufswagen für beispielsweise innerstädtische Anwendungen prädestiniert. Auf diese Weise lassen sich auch geringe Korbvolumina realisieren, die der Bevölkerungszusammensetzung und dem Einkaufsverhalten im innerstädtischen Bereich besonders Rechnung tragen. Tatsächlich verfügt der Korb meistens über ein Korbvolumen von ca. 130 Liter.

Dabei ist die Auslegung des Korbes insgesamt so beschaffen, dass auch Getränkebinde sowie Einzelflaschen in Verbindung mit ortsüblichen Einkaufsmengen aufgenommen werden können. Zusätzlich vorgesehene Stoßkanten am Korb und/oder im Bereich der Laufrollen oder Lenkrollen sorgen darüber hinaus für einen optimalen Schutz der Ladenmöblierung. Zu diesem Zweck sind die jeweiligen Stoßkanten an dem Einkaufswagen an zugehörige Stoßflächen oder Stoßkanten der Einkaufsmöbel angepasst. Schließlich werden mehrere der erfindungsgemäßen Einkaufswagen regelmäßig mit aktivierter Kindersitzeinrichtung gestapelt. Dementsprechend erfolgt auch die Entnahme, so dass eine zusätzliche Geräuschquelle in Gestalt der an der Rückwand anliegenden Rückenlehne entfällt. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: den erfindungsgemäßen Einkaufswagen in einer Übersicht,
- Fig. 2A: eine detaillierte Rückansicht auf die deaktivierte Kindersitzeinrichtung,
- Fig. 2B: den Gegenstand nach Fig. 2A bei aktivierter Kindersitzeinrichtung,
- Fig. 3: die aktivierte Kindersitzeinrichtung in einer seitlichen Detailansicht sowie entsprechend einer anderen Ausführung,
- Fig. 4: die Rückwand in einer vergrößerten Ansicht und
- Fig. 5A und 5B: eine Situation beim Stapeln der erfindungsgemäßen Einkaufswagen.

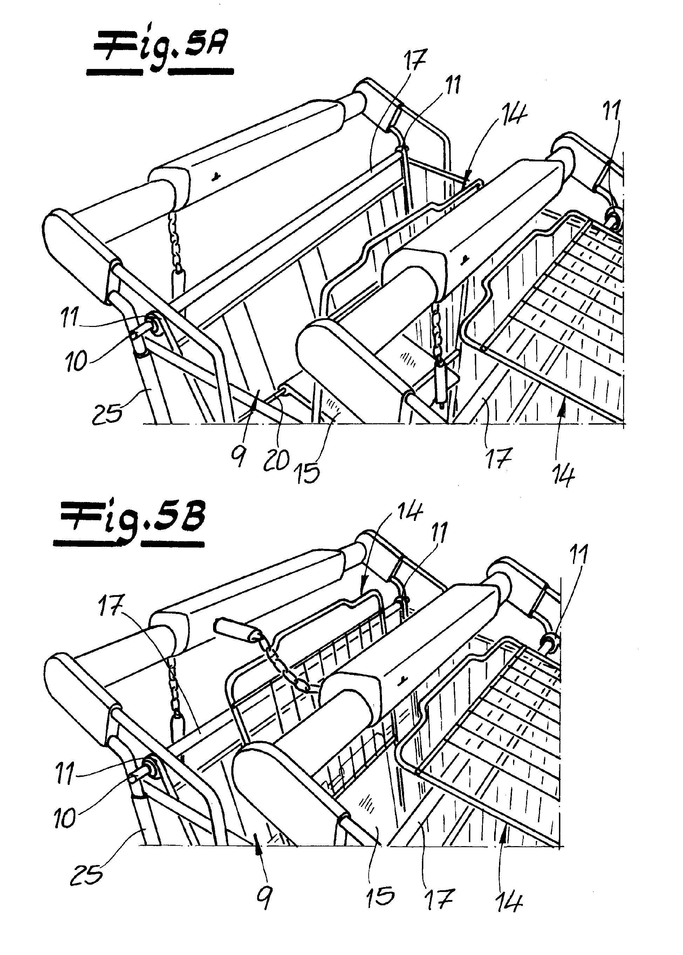

In den Figuren ist ein stapelbarer Einkaufswagen dargestellt, das heißt ein solcher, der sich mit gleich aufgebauten Einkaufswagen zu einem Stapel formieren lässt, wie er in den Fig. 5A, 5B prinzipiell dargestellt ist. Dazu werden die einzelnen Einkaufswagen in beispielsweise Breitstellungszonen in der Nähe eines Einkaufslokals ineinandergeschoben.

Der erfindungsgemäße Einkaufswagen verfügt in seinem grundsätzlichen Aufbau über ein Fahrgestell 1, 2, welches sich aus zwei bogenartigen Seitenholmen 1 und einer die Seitenholme 1 miteinander verbindenden Querstrebe 2 zusammensetzt. Zugleich sorgt ein oberseitig an das Fahrgestell 1, 2 angeschlossener Korb 3 für die Verbindung der Seitenholme 1 untereinander. Bei den Seitenholmen 1 handelt es sich um Flachovalrohre, während die Querstrebe 2 als Rechteckrohr ausgebildet ist. Unterseitig des Fahrgestells 1, 2 sorgen Lauf- bzw. Lenkrollen 4, 5 dafür, dass der gezeigte Einkaufswagen von einem Bediener problemlos bewegt werden kann. Tatsächlich verfügt das Fahrgestell 1, 2 an seiner Vorderkante über zwei feststehende Laufrollen 5, während die Hinterkante mit zwei Lenkrollen 4 ausgerüstet ist. Die jeweiligen Laufrollen und Lenkrollen 4, 5 verfügen über eine jeweilige Abweisglocke 6, welche zum Schutz von beispielsweise Sockelleisten an Regalen im Innern eines Einkaufswagens dient. Außerdem definiert die jeweilige Glocke bzw. Abweisglocke 6 die peripher äußersten Punkte des Einkaufswagens, so dass diese als Anschlagpunkte an beispielsweise Sockeln, Führungen etc. im Innern des Lokals fungieren.

Der Korb 3 ist aus vergleichbaren Gründen mit Schutzumrandungen 7 bzw. 25 ausgerüstet. Die Schutzumrandungen 7 sind im Bereich einer Vorderwand 8 an den Korb 3 eckseitig angeschlossen. Bei den Schutzumrandungen bzw. Geräuschdämpfungsmitteln 25 handelt es sich um Schlauchdämpfer 25, die eckseitig des Korbes 3 an einer Rückwand 9 vorgesehen sind. Die Schutzumrandungen 7, 25 dienen ebenso wie die Abweisglocken 6 dazu, Beschädigungen an Regalen respektive insgesamt der Ladeneinrichtung im Ladenlokal zu vermeiden. Den Schutzumrandungen bzw. Geräuschdämpfungsmitteln 25 kommt darüber hinaus noch die Funktion zu, beim Ineinanderschieben der Einkaufswagen entsprechend den Fig. 5A und 5B geräuschdämpfend zu wirken.

Die Schutzumrandungen 7 können zum Schutz der Ladeneinrichtung im Ladenlokal mit korrespondierenden Schutzkanten, Schutzleisten etc. an der fraglichen Ladeneinrichtung wechselwirken. Aus den beschriebenen Gründen sind die Abweisglocken 6 ebenso wie die Schutzumrandungen 7, 25 aus Kunststoff gefertigt.

Der Korb verfügt neben der Vorderwand 8 zusätzlich über die Rückwand 9, die sich um eine Achse 10 verschwenken lässt und zwar lediglich ins Innere des Korbes 3 hinein. Die Achse bzw. die Schwenkachse 10 wird im Ausführungsbeispiel von einer oberseitigen bzw. kopfseitigen Horizontalstrebe 10 an der Rückwand 9 definiert, die in Ösen 11 des Korbes 3 eingreift bzw. diese durchgreift.

Man erkennt, dass der Korb 3 insgesamt als Gittergeflecht aus sich im Wesentlichen senkrecht kreuzenden Horizontalstreben 12 und Vertikalstreben 13 aufgebaut ist. Im Ausführungsbeispiel sind die Streben 12, 13 beispielsweise miteinander verschweißt und mögen insgesamt verchromt sein. Das gilt auch für das Fahrgestell 1, 2.

Der Korb 3 ist vorliegend kleinvolumig ausgelegt und verfügt typischerweise über ein Korbvolumen von ca. 130 Liter. Dadurch können im Innern des Korbes 3 problemlos Getränkegebinde oder auch Einzelflaschen aufgenommen werden. Das relativ geringe Korbvolumen prädestiniert den dargestellten Einkaufswagen für Ladenlokale im innerstädtischen Bereich, die durch relativ geringe Einkaufsmengen pro Einkauf im Vergleich zu außerstädtischen Filialbetrieben ausgezeichnet sind.

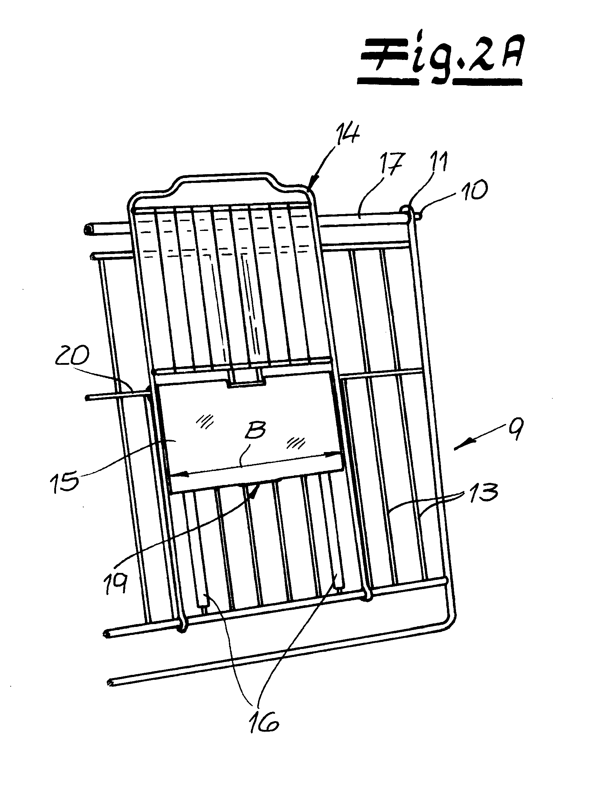

Man erkennt, dass der stapelbare Einkaufswagen nach der Erfindung zusätzlich mit einer Kindersitzeinrichtung 14, 15 ausgerüstet ist. Die Kindersitzeinrichtung 14, 15 setzt sich im Wesentlichen aus einer Rückenlehne 14 und einer Sitzfläche 15 zusammen. Sowohl die Rückenlehne 14 als auch die Sitzfläche 15 sind jeweils gelenkig an die schwenkbare Rückwand 9 des Korbes 3 angeschlossen. Die Rückenlehne 14 der Kindersitzeinrichtung 14, 15 lässt sich in ihrem deaktiviertem Zustand an die Rückwand 3 anlegen, wie dies in der vergrößerten Darstellung nach der Fig. 2A gezeigt ist. In ihrem aktiviertem Zustand ragt die Kindersitzeinrichtung 14, 15 mit ihrer Rückenlehne 14 dagegen ins Innere des Korbes 3 hinein.

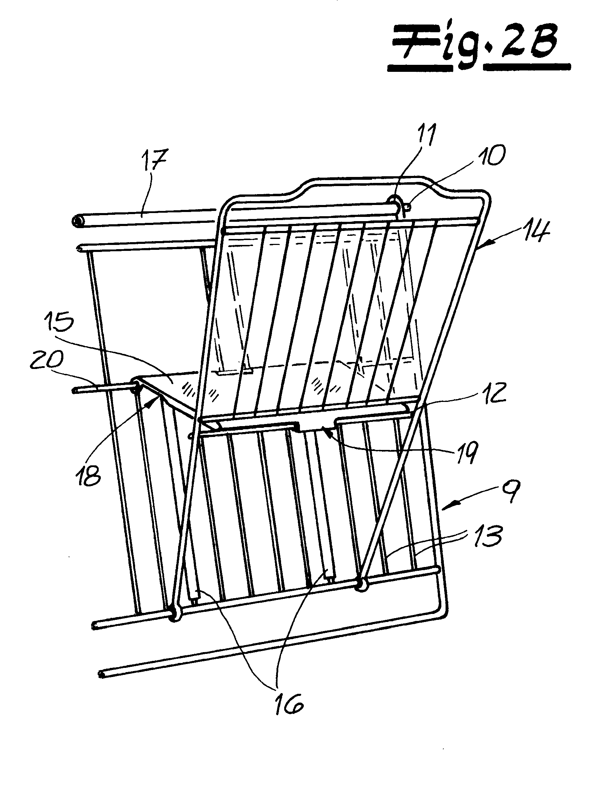

Beim Übergang vom deaktivierten Zustand nach der Fig. 2A zum aktivierten Zustand entsprechend der Fig. 2B der Kindersitzeinrichtung 14, 15 wird die zunächst an die Rückwand 9 angeklappte bzw. heruntergeklappte Sitzfläche 15 zusammen mit der Abwinklung der Rückenlehne 14 gleichzeitig abgeklappt und erreicht in aktiviertem Zustand der Kindersitzeinrichtung 14, 15 eine horizontale oder nahezu horizontale Position, so dass wie üblich ein Kind auf der Sitzfläche 15 Platz nehmen kann.

Für die Erfindung ist nun von besonderer Bedeutung, dass die schwenkbare Rückwand 9 und auch die Kindersitzeinrichtung 14, 15 mit Geräuschdämpfungsmitteln, 16, 17, 18, 19 ausgerüstet sind. Die Geräuschdämpfungsmittel 16, 17, 18, 19 sorgen dafür, dass die Kindersitzeinrichtung 14, 15 gegenüber der Rückwand 9 und auch dem Korb 3 akustisch entkoppelt wird. Das gilt zumindest für den deaktivierten Zustand der Kindersitzeinrichtung 14, 15. Im Regelfall sorgen die Geräuschdämpfungsmittel 16, 17, 18, 19 allerdings durchgängig für eine akustische Entkopplung der Kindersitzeinrichtung 14, 15 gegenüber der Rückwand 9 und auch dem Korb 3, das heißt auch in aktiviertem Zustand der Kindersitzeinrichtung 14, 15. Außerdem sorgen die Geräuschdämpfungsmittel 16, 17, 18, 19 dafür, dass das Abklappen der Sitzfläche 15 der Kindersitzeinrichtung 14, 15 akustisch gedämpft wird.

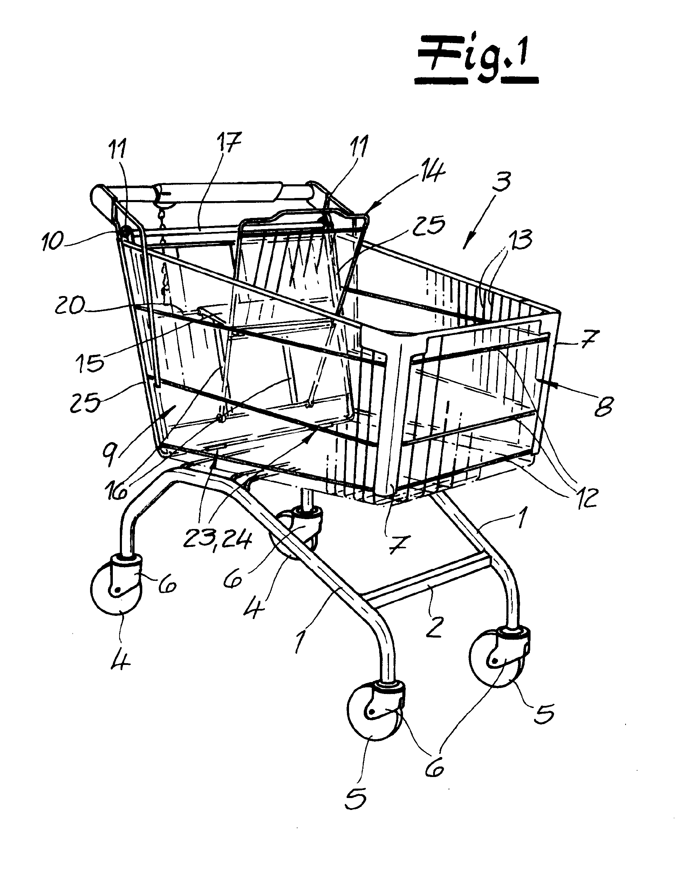

Zu diesem Zweck sind mehrere Geräuschdämpfungsmittel 16, 17, 18, 19 einerseits an der Kindersitzeinrichtung 14, 15 und andererseits der Rückwand 9 bzw. dem Korb 3 angeordnet. Tatsächlich beobachtet man bei einer vergleichenden Betrachtung der Fig. 1 und 2 Geräuschdämpfungsmittel 16, 17 an der Rückwand 9, bei welchen es sich jeweils um Schlauchdämpfer 16, 17 handelt, wie im Falle der Geräuschdämpfungsmittel bzw. Schutzumrandungen 25, die ebenfalls an der Rückwand 9 vorgesehen sind. Die beiden Schlauchdämpfer 16 sind als Vertikalschlauchdämpfer 16 ausgelegt und nehmen in ihrem Innern jeweils Vertikalstreben 13 an der Rückwand 9 auf. Vergleichbares gilt für die Schlauchdämpfer 25, die eckseitige Vertikalstreben 13 an der Rückwand 9 in ihrem Innern aufnehmen.

Bei dem Schlauchdämpfer 17 handelt es sich dagegen um einen Horizontal-Schlauchdämpfer, welcher in seinem Innern eine Horizontalstrebe 10 umschließt. Bei dieser Horizontalstrebe 10 handelt es sich um diejenige Horizontalstrebe 10 der Rückwand 9, die zugleich ihre durch die Ösen 11 des Korbes 3 hindurchgreifende Drehachse bzw. Schwenkachse 10 definiert.

Der Abstand der Vertikal-Schlauchdämpfer 16 ist geringer als eine Breite B der Sitzfläche 15 der Kindersitzeinrichtung 14, 15 bemessen. Die Breite B wird von der Länge jeweiliger Längskanten der Sitzfläche 15 vorgegeben. Dadurch ist sichergestellt, dass die Sitzfläche 15 in heruntergeklapptem Zustand entsprechend der Darstellung nach Fig. 2A an ihrem einer Gelenkachse 20 abgewandten Ende an den fraglichen Vertikal-Schlauchdämpfern 16 anliegt und folglich die Kindersitzeinrichtung 14, 15 von der Rückwand 9 bzw. dem Korb 3 insgesamt akustisch entkoppelt. Mit Hilfe der Gelenkachse 20 ist die Sitzfläche 15 schwenkbar an die Rückenwand 9 angeschlossen.

In vergleichbarer Weise sorgt der Horizontal-Schlauchdämpfer 17 in dieser deaktivierten Position der Kindersitzeinrichtung 14, 15 dafür, dass die daran anliegende Rückenlehne 14 nicht klappert bzw. ebenfalls von der Rückwand 9 und folglich dem Korb 3 akustisch entkoppelt wird. Dazu mag es sich bei den angesprochenen Schlauchdämpfern 16, 17 um solche aus Kunststoff handeln. Die Rückenlehne 14 ist ihrerseits ebenfalls schwenkbar mit der Rückwand 9 gekoppelt.

Neben den bereits angesprochenen und behandelten Geräuschdämpfungsmitteln 16, 17 an der Rückwand 9 ist auch die Kindersitzeinrichtung 14, 15 mit eigenen Geräuschdämpfungsmitteln 18, 19 ausgerüstet. Das Geräuschdämpfungsmittel 19 ist an der Sitzfläche 15 der Kindersitzeinrichtung 14, 15 ausgebildet und als Klappdämpfer 19 ausgelegt. Tatsächlich liegt der Klappdämpfer 19 zumindest im abgeklappten Zustand der Sitzfläche 15 und bei aktivierter Kindersitzeinrichtung an einer Querstrebe bzw. Horizontalstrebe 12 der Rücklehne 14 an. Das erkennt man bei einer vergleichenden Betrachtung der Fig. 2A und 2B. Der Klappdämpfer 19 ist an der der Schwenkachse 20 der Sitzfläche 15 gegenüberliegenden Kante der Sitzfläche 15 an diese angeschlossen und untergreift die Quer- bzw. Horizontalstrebe 12 der Rückenlehne 14 in aktiviertem Zustand der Kindersitzeinrichtung 14, 15. Dadurch wird die Kindersitzeinrichtung 14, 15 ergänzend in ihrem aktivierten Zustand fixiert und werden Klappergeräusche unterdrückt.

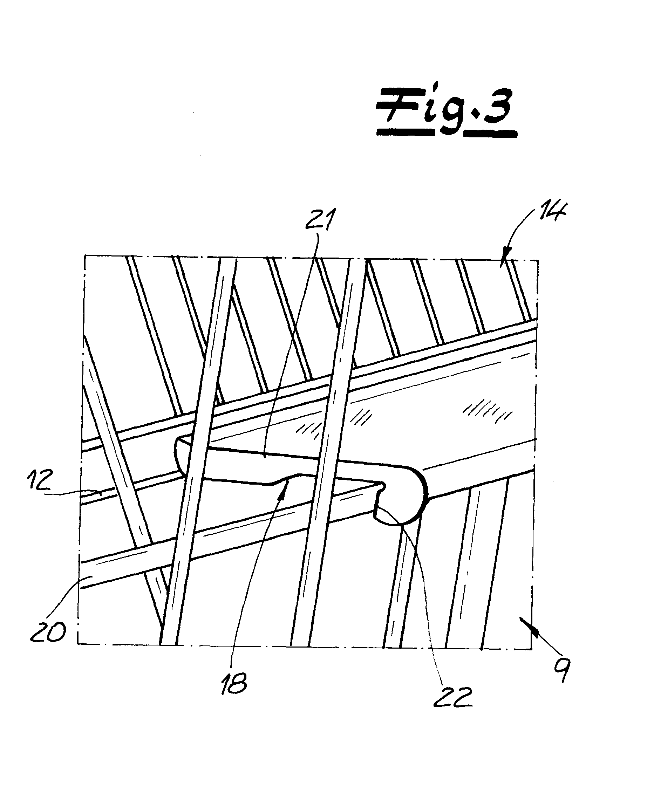

Die Kindersitzeinrichtung 14, 15 verfügt über ein weiteres Geräuschdämpfungsmittel 18 in Gestalt eines Schlagdämpfers 18. Dieses Geräuschdämpfungsmittel 18 erkennt man insbesondere in der Fig.3. Das fragliche Geräuschdämpfungsmittel bzw. der Schlagdämpfer 18 ist ebenfalls an der Sitzfläche 15 vorgesehen, und zwar an ihren jeweiligen Seitenkanten. Bei dem Schlagdämpfer 18 handelt es sich um eine Führungskontur 18 an der Sitzfläche 15. Zu diesem Zweck verfügt die Sitzfläche 15 über zwei unterseitige Führungskonturen 18, die an zugehörigen Abkantungen 21 der Sitzfläche 15 ausgebildet sind. Beim Abklappen und Anklappen der Sitzfläche 15 gegenüber der Rückwand 9 gleitet die Führungskontur 18 auf der Querstrebe bzw. Horizontalstrebe 12 der Rücklehne 14 entlang. Dadurch vollführt die Sitzfläche 15 eine Bewegung mit Richtungsumkehr, welche Schlaggeräusche bei diesem Vorgang, das heißt sowohl beim Abklappen als auch beim Anklappen, verhindert.

Die fragliche Führungskontur 18 ist wenigstens dreiteilig mit einem geraden Anfangsabschnitt, dem demgegenüber abgeschrägten Endabschnitt bzw. dem Dämpfungsanschlag 18 und einer abschließenden Anschlagkante 22 ausgelegt. Mit Hilfe der Anschlagkante 22 übergreift die Sitzfläche 15 in aktiviertem Zustand (und auch in deaktivierte, Zustand) der Kindersitzeinrichtung 14, 15 eine Querstrebe 20 an der Rückwand 9. In diesem Fall fungieren die Querstrebe 20 und die Anschlagkante 22 als gleichsam Ersatz für die zuvor bereits besprochene Schwenkachse 20 der Sitzfläche 15 gegenüber der Rückwand 9. Insofern stellt die Fig. 3 eine geringfügig abgewandelte Variante dar. So oder so erkenn man, dass die Sitzfläche 15 zusammen mit den fraglichen Dämpfungsmitteln 18, 19 und auch mit der Anschlagkante 22 insgesamt einstückig ausgebildet ist. Tatsächlich handelt es sich hierbei typischerweise um ein Kunststoffspritzgussteil.

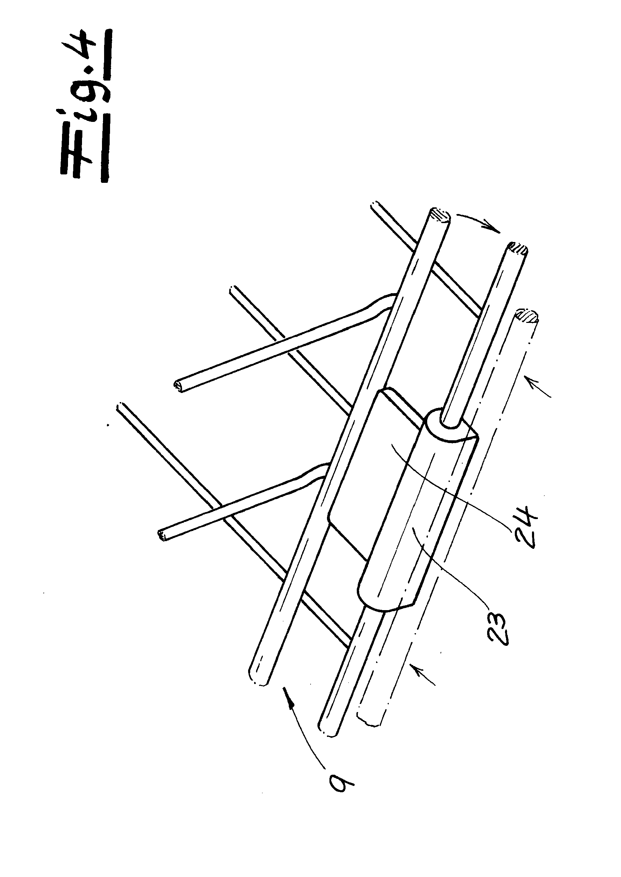

Neben den zuvor bereits behandelten Geräuschdämpfungsmitteln 16, 17, 18, 19 ist die Rückwand 9 zusätzlich noch mit einem weiteren Geräuschdämpfer 23, 24 ausgerüstet, den man besonders in der Detaildarstellung der Fig. 4 erkennt. Dieser Geräuschdämpfer 23, 24 wirkt zweifach und ist insgesamt aus zwei Komponenten 23, 24 aufgebaut. Die eine Komponente 23 sorgt dafür, dass beim Stapeln der beschriebenen Einkaufswagen entsprechend der Darstellung nach Fig. 5A, 5B ein nachfolgender Einkaufswagen gegen den fraglichen Geräuschdämpfer 23, 24 bzw. die erste Komponente 23 fährt und auch fahren kann. Dadurch ist der Stapelvorgang mit einer minimalen Geräuschkulisse verbunden. Außerdem kommen bei diesem Vorgang die seitlichen bzw. eckseitigen und bereits besprochenen Geräuschdämpfungsmittel 25 am Korb 3 zum Einsatz. Diese sorgen ergänzend beim Ineinanderschieben der Einkaufswagen für eine Geräuschminimierung.

Die zweite Komponente des Geräuschdämpfers 24 stellt sicher, dass die Rückwand 9 in entstapelter und gebrauchsfertiger Position gegenüber dem Korb 3 akustisch entkoppelt ist. Das heißt, die zweite Komponente 24 des Geräuschdämpfers 23 klemmt und dämpft die Rückwand 9, sobald sie in ihre gebrauchsfertige Position nach der Fig. 1 überführt wird.

Anhand der gestapelten Konstellation der Einkaufswagen gemäß der Fig. 5A, B wird deutlich, dass die Einkaufswagen bzw. deren Stapel einen minimalen Platz benötigen. Außerdem führt die aktivierte Kindersitzeinrichtung 14, 15 beim Stapeln und Entstapeln zu einer nochmals verringerten Geräuschkulisse. Denn bei diesem Vorgang wird die zuvor aktivierte Kindersitzeinrichtung 14, 15 gegen die zugehörigen Geräuschdämpfungsmittel 16, 17, 18, 19 angelegt.

## Patentansprüche

1. Stapelbarer Einkaufswagen, mit einem Fahrgestell (1, 2), ferner mit einem darauf angeordneten Korb (3), und mit einer Kindersitzeinrichtung (14, 15) mit einer Rückenlehne (14) und einer Sitzfläche (15), die jeweils gelenkig an eine schwenkbare Rückwand (9) des Korbes (3) angeschlossen sind, wobei
- die Rückenlehne (14) der Kindersitzeinrichtung (14, 15) in deren deaktiviertem Zustand an der Rückwand (9) anliegt und in ihrem aktivierten Zustand ins Innere des Korbes (3) unter gleichzeitigem Abklappen der Sitzfläche (15) abgewinkelt hineinragt, wobei ferner
- die Kindersitzeinrichtung (14, 15) und/oder die Rückwand (9) mit wenigstens einem Geräuschdämpfungsmittel (16, 17, 18, 19) ausgerüstet ist, und wobei
- das Geräuschdämpfungsmittel (16, 17, 18, 19) die Kindersitzeinrichtung (14, 15) gegenüber der Rückwand (9) und/oder dem Korb (3) akustisch entkoppelt und/oder das Abklappen der Sitzfläche (15) akustisch dämpft,
**dadurch gekennzeichnet,dass**
- das Geräuschdämpfungsmittel (16, 17) an der Rückwand (9) als einen oder mehrere Streben (12) im Innern aufnehmender Schlauchdämpfer (16, 17) ausgebildet ist.

2. Einkaufswagen nach Anspruch 1, **dadurch gekennzeichnet, dass** mehrere Geräuschdämpfungsmittel (16, 17, 18, 19) einerseits an der Sitzfläche (15) und andererseits an der Rückwand (9) und/oder der Rückenlehne (14) vorgesehen sind.

3. Einkaufswagen nach Anspruch 2, **dadurch gekennzeichnet, dass** das Geräuschdämpfungsmittel (18, 19) an der Sitzfläche (15) als Klappdämpfer (19) ausgebildet ist.

4. Einkaufswagen nach Anspruch 3, **dadurch gekennzeichnet, dass** der Klappdämpfer (19) in abgeklapptem Zustand der Sitzfläche (14) bei aktivierter Kindersitzeinrichtung (14, 15) an einer Querstrebe (12) der Rückwand (9) diese untergreifend anliegt.

5. Einkaufswagen nach einem der Ansprüche 2 bis 4, **dadurch gekennzeichnet, dass** das Geräuschdämpfungsmittel (18, 19) an der Sitzfläche (15) als Schlagdämpfer (18) ausgebildet ist.

6. Einkaufswagen nach Anspruch 5, **dadurch gekennzeichnet, dass** der Schlagdämpfer (18) als Führungskontur (18) an der Sitzfläche (15) ausgelegt ist.

7. Einkaufswagen nach Anspruch 5 oder 6, **dadurch gekennzeichnet, dass** die Sitzfläche (15) mit zwei unterseitigen Führungskonturen (18) ausgerüstet ist.

8. Einkaufswagen nach einem der Ansprüche 6 bis 7, **dadurch gekennzeichnet, dass** die Führungskontur (18) an einer Abkantung (21) der Sitzfläche (15) ausgebildet ist.

9. Einkaufswagen nach einem der Ansprüche 6 bis 8, **dadurch gekennzeichnet, dass** die Führungskontur (18) beim Abklappen oder Anklappen der Sitzfläche (15) auf einer Querstrebe (12) der Rückwand (9) entlanggleitet.

10. Einkaufswagen nach einem der Ansprüche 6 bis 9, **dadurch gekennzeichnet, dass** die Führungskontur (18) wenigstens dreiteilig mit im Wesentlichen geraden Anfangsabschnitt und demgegenüber abgeschrägten Endabschnitt und abschließender Anschlagkante (22) ausgelegt ist.

11. Einkaufswagen nach einem der Ansprüche 1 bis 10, **dadurch gekennzeichnet, dass** die Sitzfläche (15) zusammen mit dem einen oder den mehreren Dämpfungsmitteln (18, 19) einstückig ausgebildet ist.

12. Einkaufswagen nach einem der Ansprüche 1 bis 11, **dadurch gekennzeichnet, dass** der Schlauchdämpfer (16) als Vertikal-Schlauchdämpfer (16) mit im Innern aufgenommenen Vertikalstreben (13) ausgelegt ist.

13. Einkaufswagen nach einem der Ansprüche 1 bis 12, **dadurch gekennzeichnet, dass** die Rückwand (9) mit einem zusätzlichen Geräuschdämpfer (23, 24, 25) ausgerüstet ist.

14. Einkaufswagen nach Anspruch 13, **dadurch gekennzeichnet, dass** der Geräuschdämpfer (23, 24, 25) zweifach wirkt derart, dass die Rückwand (9) in entstapelter sowie gebrauchsfertiger Position gegenüber dem Korb (3) akustisch entkoppelt ist und zugleich als Dämpfungsanschlag für einen nachfolgenden Einkaufswagen beim Stapelvorgang fungiert.

## Claims

1. A stackable shopping cart with an undercarriage (1, 2), with a basket (3) arranged thereon and with a child seat (14, 15) comprising a backrest (14) and a seat surface (15) that are respectively connected to a pivotable rear wall (9) of the basket (3) in an articulated fashion, wherein
- the backrest (14) of the child seat (14, 15) rests against the rear wall (9) in the deactivated state and angularly protrudes into the interior of the basket (3) in the activated state when the seat surface (15) is folded down, wherein
- the child seat (14, 15) and/or the rear wall (9) is furthermore equipped with at least one noise damping means (16, 17, 18, 19), and wherein
- the noise damping means (16, 17, 18, 19) acoustically decouples the child seat (14, 15) from the rear wall (9) and/or the basket (3) and/or acoustically dampens folding of the seat surface (15),
**characterized in that**
- the noise damping means (16, 17) on the rear wall (9) is realized in the form of a tubular damper (16, 17) that accommodates one or more braces (12) in its interior.

2. The shopping cart according to Claim 1, **characterized in that** several noise damping means (16, 17, 18, 19) are provided on the seat surface (15) on the one hand and on the rear wall (9) and/or the backrest (14) on the other hand.

3. The shopping cart according to Claim 2, **characterized in that** the noise damping means (18, 19) on the seat surface (15) is realized in the form of a folding damper (19).

4. The shopping cart according to Claim 3, **characterized in that** the folding damper (19) rests against and engages under a cross brace (12) of the rear wall (9) in the folded-down state of the seat surface (14) when the child seat (14, 15) is activated.

5. The shopping cart according to one of Claims 2 to 4, **characterized in that** the noise damping means (18, 19) on the seat surface (15) is realized in the form of a beat damper (18).

6. The shopping cart according to Claim 5, **characterized in that** the beat damper (18) is designed in the form of a guide contour (18) on the seat surface (15).

7. The shopping cart according to Claim 5 or 6, **characterized in that** the seat surface (15) is equipped with two guide contours (18) on its underside.

8. The shopping cart according to one of Claims 6 to 7, **characterized in that** the guide contour (18) is realized on a bevel (21) of the seat surface (15).

9. The shopping cart according to one of Claims 6 to 8, **characterized in that** the guide contour (18) slides along a cross brace (12) of the rear wall (9) when the seat surface (15) is folded up or folded down.

10. The shopping cart according to one of Claims 6 to 9, **characterized in that** the guide contour (18) is realized in at least three parts with an essentially straight initial section, an end section that is bevelled relative thereto and a terminal stopping edge (22).

11. The shopping cart according to one of Claims 1 to 10, **characterized in that** the seat surface (15) and the one or more damping means (18, 19) are realized in one piece.

12. The shopping cart according to one of Claims 1 to 11, **characterized in that** the tubular damper (16) is realized in the form of a vertical tubular damper (16) with vertical braces (13) accommodated in its interior.

13. The shopping cart according to one of Claims 1 to 12, **characterized in that** the rear wall (9) is equipped with an additional noise damper (23, 24, 25).

14. The shopping cart according to Claim 13, **characterized in that** the noise damper (23, 24, 25) fulfils a double function due to the fact that it acoustically decouples the rear wall (9) from the basket (3) in the destacked and ready-to-use position and simultaneously acts as a damping stop for an adjacent shopping cart during the stacking process.

## Revendications

1. Chariot de courses empilable comportant un train de roulement (1, 2), de même qu'un panier (3) disposé dessus, un dispositif de siège d'enfant (14, 15) pourvu d'un dossier (14) et d'une surface d'assise (15), qui sont raccordés respectivement de manière articulée à une paroi arrière pivotable (9) du panier (3),
- le dossier (14) du dispositif de siège d'enfant (14, 15) reposant dans sa position désactivée sur la paroi arrière (9) et dépassant en angle dans sa position activée dans l'intérieur du panier (3) tout en déployant la surface d'assise (15),
- le dispositif de siège d'enfant (14, 15) et/ou la paroi arrière (9) étant équipés d'au moins un insonorisateur (16, 17, 18, 19) et
- l'insonorisateur (16, 17, 18, 19) isolant le dispositif de siège d'enfant (14, 15) de la paroi arrière (9) et/ou du panier (3) et/ou amortissant le déploiement de la surface d'assise (15) du point de vue acoustique,
**caractérisé en ce que**
- l'insonorisateur (16, 17) se présente au niveau de la paroi arrière (9) sous forme d'un ou plusieurs amortisseurs tubulaires (16, 17) recevant une ou plusieurs traverses (12) à l'intérieur.

2. Chariot de courses selon la revendication 1, **caractérisé en ce que** plusieurs insonorisateurs (16, 17, 18, 19) sont prévus d'une part sur la surface d'assise (15) et d'autre part sur la paroi arrière (9) et/ou le dossier (14).

3. Chariot de courses selon la revendication 2, **caractérisé en ce que** l'insonorisateur (18, 19) est réalisé sur la surface d'assise (15) sous forme d'un insonorisateur rabattable (19).

4. Chariot de courses selon la revendication 3, **caractérisé en ce que** l'insonorisateur rabattable (19), en position déployée de la surface d'assise (14), lorsque le dispositif de siège d'enfant (14, 15) est activé, s'engrène par-dessous dans une traverse (12) de la paroi arrière (9).

5. Chariot de courses selon les revendications 2 à 4, **caractérisé en ce que** l'insonorisateur (18, 19) est réalisé sur la surface d'assise (15) sous forme d'un amortisseur de chocs (18).

6. Chariot de courses selon la revendication 5, **caractérisé en ce que** l'amortisseur de chocs (18) est conçu sous forme d'un contour de guidage (18) sur la surface d'assise (15).

7. Chariot de courses selon la revendication 5 ou 6, **caractérisé en ce que** la surface d'assise (15) est équipée sur son dessous de deux contours de guidage (18).

8. Chariot de courses selon les revendications 6 à 7, **caractérisé en ce que** le contour de guidage (18) est réalisé sur un biseau (21) de la surface d'assise (15).

9. Chariot de courses selon les revendications 6 à 8, **caractérisé en ce que** le contour de guidage (18), au déploiement ou au rabattement de la surface d'assise (15), glisse le long d'une traverse (12) de la paroi arrière (9).

10. Chariot de courses selon les revendications 6 à 9, **caractérisé en ce que** le contour de guidage (18) est conçu en au moins trois pièces avec une section initiale sensiblement droite et en face une section terminale sensiblement oblique puis un bord de butée terminal (22).

11. Chariot de courses selon les revendications 1 à 10, **caractérisé en ce que** la surface d'assise (15) forme bloc avec l'un ou les plusieurs insonorisateurs (18, 19).

12. Chariot de courses selon les revendications 1 à 11, **caractérisé en ce que** l'amortisseur tubulaire (16) se présente sous forme d'un amortisseur tubulaire vertical (16) à l'intérieur duquel des montants verticaux (13) sont reçus.

13. Chariot de courses selon les revendications 1 à 12, **caractérisé en ce que** la paroi arrière (9) est équipée d'un insonorisateur supplémentaire (23, 24, 25).

14. Chariot de courses selon la revendication 13, **caractérisé en ce que** l'insonorisateur (23, 24, 25) agit doublement de manière à isoler du point de vue acoustique la paroi arrière (9), en position non empilée et en position prête à l'usage, du panier (3), et fait en même temps office de butée d'amortissement pour un chariot de courses suivant lors du processus d'empilement.
